# EUROPEAN PATENT SPECIFICATION

(11) **EP 3 509 435 B1**
(45) Date of publication and mention of the grant of the patent: **14.02.2024**
(21) Application number: 17788139.8
(22) Date of filing: 06.10.2017
(51) Int. Cl.: A23L 5/10, A23L 7/13, A23L 29/10, A23L 29/212

(54) **MANUFACTURE OF SNACK FOOD CHIPS**
HERSTELLUNG VON SNACK-CHIPS
FABRICATION DE CHIPS POUR COLLATION

(30) Priority: 06.10.2016 US 201662405007 P; 06.10.2016 US 201662405050 P
(43) Date of publication of application: 17.07.2019
(73) Proprietor: Frito-Lay Trading Company GmbH, 3011 Bern (CH)
(72) Inventor: BHASKAR, Ajay Rajeshwar, Allen Texas 75013 (US); BOODEN, Helen Charlotte, Cotgrave Nottinghamshire NG12 3TP (GB); SMITH, Katherine, Loughborough Leicestershire LE12 1ET (GB); VERA NUNEZ, Daniel, Leicester LE1 1TH (GB); PANKHANIA, Depesh, Leicester LE2 3FJ (GB); TURNER, Michael, Stamford PE9 2TE (GB)
(74) Representative: Harris, Oliver John Richard
(86) International application number: PCT/EP2017/075480
(87) International publication number: WO 2018/065577

(56) References cited:
- EP-A2- 0 324 460
- US-A- 4 770 891
- US-A1- 2002 018 837
- US-A1- 2002 022 076

## Description

### Background to the Invention

The present invention relates to a method of manufacturing snack food chips, in particular tortilla chips.

### Description of the Prior Art

The manufacture of snack food chips is well known. A variety of different snack food chips is known having various shapes and configurations, and compositions.

It is known to provide tortilla chips, which are composed of a maize-based composition (maize hereinafter being called "com" in accordance with the terminology used in the United States) which has been formed as a corn masa dough, which is sheeted, cut into individual dough pieces, which are typically triangular in plan (although other shapes are widely known), toasted in an oven and then fried. The fried chips are then seasoned. The masa dough uses fresh corn which has been subject to a nixtamalization process, in which the corn is boiled in an aqueous solution comprising lime, then allowed to soak in the solution and then the corn is washed and ground to produce corn masa. This nixtamalization process produces "fresh corn masa" as described in the present specification, and in this specification "fresh corn masa" is used to define fresh corn which has been subject to such a nixtamalization process.

US Patent Application Publication Nos. US 2005/0260314 A1 and US 2008/0044534 A1, both in the name of Baker et al., disclose a method of making a masa-based dough to produce a fried tortilla chip-like product, in which starch is added to corn masa dough to help control moisture release during frying. The dough ingredients include dry corn masa which is combined with pre-hydration water and mixed to make a pre-hydrated masa, then starches and minor ingredients are mixed with the pre-hydrated masa to form a flour, and then water is added to the flour to make an aerated buoyant masa dough. In an example the added starches are potato starch (pre-gelatinized) and modified starch.

Consumers generally desire tortilla chips which have particular visual characteristics, in particular a chip without any holes extending through the thickness of the chip and a blistered surface which comprises a distribution of small blisters on the surfaces of the chip. The blisters give the tortilla chip a more natural hand-fried appearance as compared to a uniformly flat surface. However, the blisters should be uniformly distributed over the chip surface, have a regular size distribution and should not be excessively punctured. Also, the chips should not be cracked or have through-holes therein.

In order to provide the blistered surface, the oven toasting step is used. This oven toasting step case-hardens the raw dough piece, i.e. creates a hard surface layer while leaving a raw dough composition in the middle of the chip. In the subsequent final cooking step, namely frying, the surface of the tortilla chip becomes uniformly blistered with an array of surface blisters. The surface blisters are bubble-like voids extending away from the body of the chip, and preferably have a continuous curved wall, which is substantially semi-spherical or semi-ovoid, above the body of the chip. Some blisters may have a punctured wall, but preferably a majority of the blisters, i. e. at least 50% by number, are unpunctured during the manufacturing process. These blisters are formed by steam which is generated by cooking the moisture-containing dough; the steam is formed in the flexible starch matrix and then expands to form the blisters. If the oven toasting step is omitted, a "pillow" would be formed from the dough piece, by separation and expansion of the opposed outer surfaces of the dough piece. However, when oven toasting is employed, the case hardened outer surfaces provide a plurality of localised weak points, which result in the formation of a plurality of blisters. Nevertheless, the known toasting process tends to cause uneven drying on the surface of the chip, which in turn tends to provide a moisture gradient which leads to uncontrolled blister sizes on the chip surfaces after frying.

There is currently no known tortilla chip manufacturing method to produce tortilla chips with a controlled level of blistering which does not employ a toasting oven to carry out a preliminary toasting step prior to final cooking.

If a masa dough using fresh corn is employed using only a frying step as the cooking step, and does not employ a toasting step, typically the resultant fried chip has an expanded pillow-like structure, i.e. a large central void surrounded by the interconnected peripheral edges of two opposed layers of the tortilla chip, or the tortilla chip does not exhibit any significant blistering. The toasting step is added to form case-hardened surfaces which then are readily able to form blisters in the subsequent frying step. However, the use of a toasting oven increases the cost and complexity of the tortilla chip manufacturing line.

It is known to make tortilla chips using corn masa flour and without the use of fresh corn processed upstream of the dough manufacture. However, that process suffers from the problem that an oven toasting step is required to case harden the chips to control blistering. In addition, the tortilla chips tend to have a low blister count and an undesired grainy texture. US 2002/022076 A1 and US 2002/018837 A1 disclose uniformly shaped snack chips having raised surface features and a method of preparing the snack chips by forming a dough comprising precooked starch-based material and pregelatinized starch.

### Summary of the Invention

There is a need in the art to provide a method of manufacturing snack food chips, in particular tortilla chips, that can provide a product of highly acceptable appearance and morphology to the consumer, in particular with a controlled level of blistering, and which can be produced in an efficient and cost-effective manner and can have a distinctive taste of corn, and texture, that consumers associate with traditional tortilla chips.

The present invention aims at least partially to meet those needs.

The present invention accordingly provides a method of manufacturing snack food chips, the method comprising the steps of:
i. providing a first starch-containing component which comprises a cold water swelling starch, a second starch-containing component which comprises substantially ungelatinized starch, and a third starch-containing component which comprises fresh corn masa that is ungleatinized;
ii. forming a dough from a mixture of the first, second and third starch-containing components and water, the cold water swelling starch forming a gel matrix in the dough;
iii. forming a dough sheet from the dough;
iv. cutting a plurality of dough pieces from the dough sheet; and
v. cooking the dough pieces to form a plurality of snack food chips, the cooking step being carried out to cause the substantially ungelatinized starch in the second starch-containing component to gelatinize, the snack food chips comprising a starch matrix formed from the first and second starch-containing components, and ungelatinized corn masa particles dispersed in the starch matrix, wherein the cooking comprises or consists of frying and the frying temperature is from 160 to 200 °C and the frying time is from 15 to 30 seconds.

In a preferred embodiment of the present invention, the cold water swelling starch has a peak viscosity at a temperature of less than 50 °C, when measured by a rapid viscosity analyser (RVA) in excess water having a weight of water which is 3 times the weight of the cold water swelling starch.

In preferred embodiments of the present invention, in step i the first, second and third starch-containing components are each dry ingredients and optionally are formed as a dry mixture for forming the dough in step ii. In this specification, the fresh corn masa is to be considered as a "dry ingredient" and part of a "dry mixture" for forming the dough, and any concentration range defined as being based upon the weight of dry ingredients of the dough includes the corn masa within those dry ingredients.

In preferred embodiments of the present invention, the first starch-containing component may consist of the cold water swelling starch, the second starch-containing component may consist of the substantially ungelatinized starch, and the third starch-containing component may consist of the fresh corn masa, or any one of more of these components may consist of the recited cold water swelling starch, substantially ungelatinized starch, and fresh corn masa starch in any combination.

Typically, the corn masa has been prepared by a conventional nixtamalization process carried out on fresh ground corn immediately prior to forming the dough.

In preferred embodiments of the present invention, step ii forms a dough wherein the dough comprises from 35 to 75 wt% fresh corn masa, from 10 to 40 wt% of the second starch-containing component, and from 5 to 30 wt% of the first starch-containing component, each based upon the weight of dry ingredients of the dough, and the dough comprises from 25 to 35 wt% added water, based on the weight of the dough, wherein the dough is formed at a temperature of up to 30 °C by mixing dry ingredients of the dough with water for a period of from 3 to 60 seconds, optionally from 3 to less than 60 seconds.

In a preferred embodiment of the present invention, in cooking step v the second starch-containing component gelatinizes to form a continuous flexible starch matrix in which entrapped steam forms bubbles which cause expansion of the continuous flexible starch matrix.

In a preferred embodiment of the present invention, in step ii the dough is formed at a temperature of up to 30 °C, optionally from 5 to 20 °C, further optionally from 10 to 15 °C.

In preferred embodiments of the present invention, the second starch-containing component has a peak viscosity at a temperature of from 50 to 80 °C, optionally from 60 to 70 °C, when measured by a rapid viscosity analyser (RVA) in excess water having a weight of water which is 3 times the weight of the second starch-containing component.

In preferred embodiments of the present invention, the third starch-containing component has a peak viscosity at a temperature of greater than 80 °C, when measured by a rapid viscosity analyser (RVA) in excess water having a weight of water which is 3 times the weight of the third starch-containing component.

Typically, the dough comprises from 35 to 75 wt% fresh corn masa, from 10 to 40 wt% of the second starch-containing component, and from 5 to 30 wt% of the first starch-containing component, each based upon the weight of the dry ingredients of the dough.

In preferred embodiments of the present invention, the dough comprises from 45 to 70 wt%, more preferably from 50 to 65 wt%, fresh corn masa, based upon the weight of the dry ingredients of the dough.

In preferred embodiments of the present invention, the dough comprises from 15 to 30 wt%, more preferably from 20 to 30 wt%, typically about 25 wt%, of the second starch-containing component, based upon the weight of the dry ingredients of the dough.

Preferably, the second starch-containing component is selected from tapioca starch and corn starch or a mixture thereof and preferably comprises tapioca cook-up starch and/or waxy corn cook-up starch.

In preferred embodiments of the present invention, the dough comprises from 5 to 20 wt%, more preferably from 10 to 15 wt%, typically about 12 wt%, of cold water swelling starch in the first starch-containing component, based upon the weight of the dry ingredients of the dough.

Typically, the first starch-containing component is selected from a pre-gelatinized cereal flour, a pre-gelatinized starch derivative, or any mixture thereof. The first starch-containing component may be at least one pre-gelatinized cereal flour selected from corn, wheat, barley, rice, spelt, or any other grain-derived product, or any mixture thereof. Preferably, the first starch-containing component is a pre-gelatinized corn flour.

In preferred embodiments of the present invention, the dough further comprises from 5 to 20 wt%, more preferably from 10 to 15 wt%, based upon the weight of the dry ingredients of the dough, of at least one cereal flour selected from wheat, barley, rice, spelt, or any mixture thereof.

In preferred embodiments of the present invention, the cooking consists of frying and there is no oven or toasting step prior to the frying step.

In preferred embodiments of the present invention, the dough comprises from 25 to 30 wt% added water, typically from 25 to 30 wt% added water, based on the weight of the dough. In preferred embodiments of the present invention, the dough further comprises from 0.2 to 1.5 wt%, more preferably from 0.2 to 0.5 wt% of an emulsifier, which binds to free starch, based on the weight of the dough. Preferably, the emulsifier is a monoglyceride-diglyceride emulsifier comprising a mixture of at least one monoglyceride and at least one diglyceride, optionally the monoglyceride-diglyceride emulsifier comprising or consisting of a food additive having E-number E471.

Preferably, the weight ratio of the added water: emulsifier in the dough is from 27:1 to 200:1, more preferably from 50:1 to 150:1, optionally from 75:1 to 125:1.

The monoglyceride-diglyceride emulsifier may be added to the dough as a liquid or as a solid, preferably as a liquid. In liquid form the monoglyceride-diglyceride emulsifier may be in melted form (for example heated to a temperature of 55 °C), or, less preferably, is mixed in a vegetable oil, such as rapeseed oil or sunflower oil, in particular high oleic acid sunflower oil (HOSO).

In preferred embodiments of the present invention, the dough pieces have a thickness of from 0.5 to 1.5 mm, typically from 0.6 to 1 mm.

In preferred embodiments of the present invention, the dough pieces are shaped against a mould during frying so that the snack food chips are three-dimensionally shaped with a preset shape. In preferred embodiments of the present invention, the cooking comprises or consists of frying and the frying temperature is from 170 to 190 °C, further optionally about 180 °C.

In preferred embodiments of the present invention, the frying time is from from 16 to 25 seconds, further optionally from 18 to 23 seconds.

In preferred embodiments of the present invention, the dough is formed by mixing together the first, second and third starch-containing components to form a dry mix, and then mixing the dry mix with added water and liquid monoglyceride-diglyceride emulsifier to form the dough. Typically, the dry mix has a moisture content of from 5 to 20 wt% water in the dry ingredients (i.e. without addition of any added water in liquid form, which is later added to form the dough), optionally from 10 to 12 wt% water, based on the weight of the dry mix. Typically, when the dry mix is mixed with the added water and monoglyceride-diglyceride emulsifier to form the dough the dry mix has a temperature of from 5 to 30 °C, optionally from 5 to 25 °C, and the water has a temperature of from 5 to 15 °C, optionally from 7 to 12 °C, further optionally from 8 to 11 °C. Typically, the dry mix is mixed with the added water and monoglyceride-diglyceride emulsifier to form the dough for a period of from 3 to 30 seconds, optionally from 5 to 30 seconds.

In addition to the monoglyceride-diglyceride emulsifier which is employed to control blistering during cooking, the dough may optionally comprise a further emulsifier as a release agent to assist release of the dough from sheeting rolls and/or moulds for forming the chips. The release agent may comprise lecithin, added to the dough either as a solid powder (for example in the dry mix) or as a liquid (for example admixed with the water added to the dry mix to form the dough).

In preferred embodiments of the present invention, the snack food chip comprises a tortilla chip.

In preferred embodiments of the present invention, in a random population of 100 of the tortilla chips, more than 90% by number have a continuous wall without through-holes or cracks extending therethrough.

In preferred embodiments of the present invention, the tortilla chip has opposite major surfaces which have a plurality of blisters thereon, each blister extending outwardly on both opposite major surfaces.

In preferred embodiments of the present invention, for a sample of 6 randomly selected chips, the blisters have a mean total number of blisters per cm² of the opposite major surfaces of from 0.92 to 1.20, preferably from 1.00 to 1.20, with the blisters having a maximum width of 1.2 mm, optionally wherein for the sample of 6 randomly selected chips, the blisters include a mean total number of blisters having a maximum width of less than 0.5 mm of from 0.63 to 0.83, preferably from 0.68 to 0.78, blisters per cm², and a mean total number of blisters having a maximum width of from 0.5 to 1.2 mm of from 0.25 to 0.43, preferably from 0.30 to 0.38, blisters per cm².

The method of the present invention manufactures a snack food chip comprising a starch matrix composed of at least one gelatinized and expanded starch, and a plurality of particles distributed in the starch matrix, the particles being composed of a third starch-containing component which comprises corn masa, the chip further having opposite major surfaces which have a plurality of blisters thereon, each blister extending outwardly on both opposite major surfaces.

In preferred embodiments of the present invention, the snack food chip comprises a tortilla chip.

In preferred embodiments of the present invention, for a sample of 6 randomly selected chips, the blisters have a mean total number of blisters per cm² of the opposite major surfaces of from 0.92 to 1.20, preferably from 1.00 to 1.20, with the blisters having a maximum width of 1.2 mm, optionally wherein for the sample of 6 randomly selected chips, the blisters include a mean total number of blisters having a maximum width of less than 0.5 mm of from 0.63 to 0.83, preferably from 0.68 to 0.78, blisters per cm², and a mean total number of blisters having a maximum width of from 0.5 to 1.2 mm of from 0.25 to 0.43, preferably from 0.30 to 0.38, blisters per cm².

In preferred embodiments of the present invention, the starch matrix includes at least one of tapioca starch and corn starch or a mixture thereof.

In preferred embodiments of the present invention, the matrix comprises from 10 to 40 wt% starch selected from tapioca starch and corn starch or a mixture thereof and from 5 to 30 wt% of at least one further cereal based starch, each based upon the weight of the snack food chip.

In preferred embodiments of the present invention, the matrix comprises from 15 to 30 wt%, more preferably from 20 to 30 wt%, yet more preferably about 25 wt%, starch selected from tapioca starch and corn starch or a mixture thereof, based upon the weight of the snack food chip. The starch selected from tapioca starch and corn starch or a mixture thereof is preferably derived from tapioca cook-up starch and/or waxy corn cook-up starch.

In preferred embodiments of the present invention, the matrix comprises from 5 to 20 wt%, more preferably from 10 to 15 wt%, yet more preferably about 12 wt%, of the at least one further cereal based starch, based upon the weight of the snack food chip. The at least one further cereal based starch is typically derived from a cold water swelling starch, optionally which has a peak viscosity at a temperature of less than 50 °C, when measured by a rapid viscosity analyser (RVA) in excess water having a weight of water which is 3 times the weight of the cold water swelling starch, further optionally which comprises a pre-gelatinized cereal flour, a pre-gelatinized starch derivative, or any mixture thereof. The pre-gelatinized cereal flour may be selected from corn, wheat, barley, rice, spelt, or any mixture thereof. Typically, the cold water swelling starch is a pre-gelatinized corn flour. In preferred embodiments of the present invention, the particles comprise corn masa in an amount of from 35 to 75 wt%, more preferably from 45 to 70 wt%, yet more preferably from 50 to 65 wt%, based upon the weight of the snack food chip.

In preferred embodiments of the present invention, the matrix further comprises from 5 to 20 wt%, more preferably from 10 to 15 wt%, based upon the weight of the snack food chip, of the at least one cereal selected from wheat, barley, rice, spelt, or any mixture thereof.

In preferred embodiments of the present invention, the snack food chip is three-dimensionally shaped.

The preferred embodiments of the present invention can provide a novel method of manufacturing a snack food chip, in particular a tortilla chip, which can exhibit a controlled level of blistering, in particular a uniform blister distribution over the chip surfaces, without employing a toasting or oven step prior to a frying step, the latter being the cooking step. Preferred embodiments of the present invention can provide that the controlled level of blistering is achieved in combination with the use of fresh corn masa on the tortilla chip manufacturing line, i.e. fresh corn masa produced by a nixtamalization step carried out on fresh ground corn immediately prior to forming the dough. The fresh corn masa is added to provide additional corn flavour and/or texture.

The absence of an oven or toasting unit in the tortilla chip manufacturing line reduces the capital costs and running costs of the manufacturing line.

Furthermore, the dough of the preferred embodiments has been found to be cohesive and readily sheetable at high speed and the dough can be formed very quickly, even in a period as low as 3 seconds. The sheetable dough provides that after frying, without requiring a preliminary oven or toasting step, and using fresh corn masa, the tortilla chips do not exhibit any significant number of cracks or through-holes.

Without being bound by any theory, it is believed by the present inventors that the specific dough composition forms a continuous starch network from the initial cold water swelling starch, which has particles of corn masa distributed in the matrix. After cooking the tapioca starch expands and blisters are formed. Such a dough is cohesive and readily sheetable, and in turn permits the formation of a uniform and regular distribution of blisters during the frying process, and the absence of cracks or though-holes in the resultant tortilla chips.

The present invention is least partly predicated on the finding by the present inventors that by providing a dough comprising a first starch-containing component which includes cold water swelling starch (for example a pre-gelatinized flour), a second starch-containing component which comprises substantially ungelatinized starch (for example tapioca and/or corn starch, such as cook-up starch), and a third starch-containing component which comprises fresh corn masa and other minor ingredients, some of which may be corn-based, the dough can be formed, readily sheeted, cut into pieces and then fried. No toasting step is required.

The first starch-containing component includes cold water swelling starch which forms a gel matrix for the dough. The cold water swelling starch has a peak viscosity at a temperature of less than 50 °C, when measured by a rapid viscosity analyser (RVA) in excess water having a weight of water which is 3 times the weight of the cold water swelling starch. This can provide a cohesive sheetable dough that can be formed at a low temperature, for example at about room temperature or lower. The dough is formed at a temperature below the gelation temperature of both the second starch-containing component which comprises substantially ungelatinized starch (for example tapioca and/or corn starch, such as cook-up starch), and the third starch-containing component which comprises fresh corn masa. The second starch-containing component has a peak viscosity at a temperature of from 50 to 80 °C, optionally from 60 to 70 °C, when measured by a rapid viscosity analyser (RVA) in excess water having a weight of water which is 3 times the weight of the second starch-containing component. The third starch-containing component has a peak viscosity at a temperature of greater than 80 °C, when measured by a rapid viscosity analyser (RVA) in excess water having a weight of water which is 3 times the weight of the third starch-containing component. When the dough is cooked, for example by frying, the dough is heated to a temperature above the gelatinization temperatures of the second starch-containing component and the peak RVA viscosity of the third starch-containing component.

Since the second starch-containing component has a peak RVA viscosity temperature below the peak RVA viscosity temperature of the fresh corn masa, the second starch-containing component, for example tapioca and/or corn starch, rapidly absorbs water from the dough at the elevated cooking temperature, gelatinizes and expands due to the generation of steam. In the cooking step the second starch-containing component gelatinizes to form a continuous flexible starch matrix in which entrapped steam forms bubbles which cause expansion of the continuous flexible starch matrix. The water absorption of the second starch-containing component occurs preferentiallv to the water absorption of the fresh corn masa of the third starch-containing component, which has a higher peak RVA viscosity temperature, and so the water in the dough is absorbed by the second starch-containing component, leaving the corn masa of the third starch-containing component as particles dispersed throughout the starch matrix and having little or substantially no water absorption in the corn masa.

Since the second starch-containing component is distributed homogeneously throughout the dough, the gelatinization occurs throughout the dough to form an expanded starch matrix together with the first starch-containing component. The expanded matrix forms a typical expanded and crunchy texture associated with tortilla chips. The substantially uniform gelatinization provides a plurality of nucleation sites for steam generation as the dough is rapidly dehydrated during cooking. The steam generated forms a substantially uniform array of a plurality of blisters, of substantially uniform size distribution, on opposite surfaces of the chip. Steam generation does not tend to occur at the corn masa particles, which may otherwise cause a non-uniform blister morphology and may cause local stresses in the matrix which could form through-holes or cracks in the cooked chip.

The corn masa remains as particles which are substantially free of absorbed water and so does not form part of the starch matrix, but instead forms a substantially uniform distribution of particles in the matrix. The corn masa particles can provide a tortilla chip taste and crunch to the chip, with the distinctive taste of corn associated with traditional tortilla chips using corn masa produced by a nixtamalization process carried out on fresh ground corn.

Accordingly, by providing three starch components having different peak RVA viscosity temperature characteristics, a sheetable dough can be formed at low temperature and a snack food chip with a corn taste and mouthfeel characteristics, exhibiting a substantially uniform surface blistering and substantially without through-holes or cracks, can be manufactured.

The preferred embodiments of the present invention can further provide a method for manufacturing three-dimensionally shaped snack food chips, such as tortilla chips, which exhibit the desired blistering. The shaped tortilla chips can be manufactured at low production costs as well as low capital expenditure. The dough pieces can be shaped by a mould during the frying process. The resultant tortilla chips may have any desired two dimensional plan shape, such as triangular, and any desired three dimensional shape, such as being regularly curved so that a plurality of the tortilla chips are mutually stackable.

Although the invention has particular application to the manufacture of shaped tortilla chips, the method or the present invention may be used to produce a variety of different snack food chip compositions, as well and shapes. For example, the snack food chip may comprise, in addition to corn masa, any cereal-based composition, and may comprise any of, any mixture of, or all of, wheat, barley, rice as well as any seasoning, either within the cereal-based composition and/or applied as a topical seasoning.

The snack food chips may be provided with other product design features to improve eating quality, for example particular flavourings or texturizing components. The snack food chips may be provided in a consumer acceptable retail format, for example a packaging such as a bag or carton, typically hermetically sealed, which is compatible with a retail sales environment.

### Brief Description of the Drawings

Embodiments of the present invention will now be described by way of example only with reference to the accompanying drawings, in which:
Figure 1 schematically illustrates a process flow of a method for manufacturing snack food chips in accordance with an embodiment of the present invention;
Figure 2 schematically illustrates a cross-section of a snack food chip in accordance with an embodiment of the present invention;
Figure 3 is a graph illustrating the variation of viscosity with time during RVA analysis for the first and second starch components used in accordance with an embodiment of the present invention; and
Figure 4 is a graph illustrating the variation of viscosity with time during RVA analysis for the doughs produced in accordance with an Example of the present invention and two Comparative Examples.

### Detailed Description of the Invention

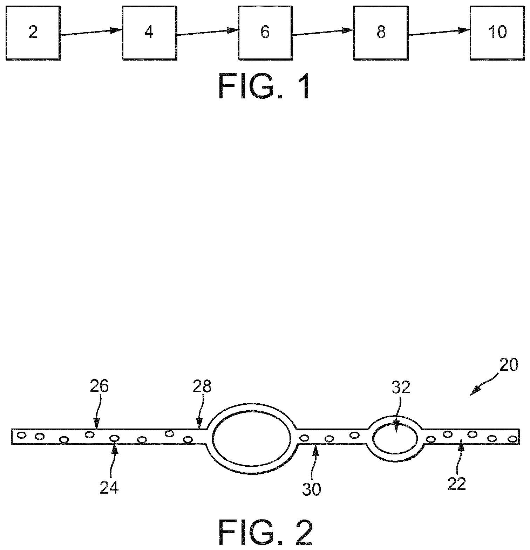

Referring to Figure 1 of the accompanying drawings, there is shown a process flow of a method for manufacturing snack food chips, in particular tortilla chips, in accordance with an embodiment of the present invention.

In the method, in a first step 2 a number of starch-containing components are provided. These comprise a first starch-containing component which includes cold water swelling starch, a second starch-containing component which comprises substantially ungelatinized starch, and a third starch-containing component which comprises fresh corn masa. The fresh corn masa is produced by a nixtamalization step carried out on fresh ground corn, typically immediately prior to forming the dough.

The fresh corn masa enhances the corn taste of the chip. The fresh corn masa typically has a moisture content of about 50 wt% based on the total weight of the fresh corn masa. In a second step 4 a dough is formed from a mixture of the first, second and third starch-containing components and added water. The dough is typically formed by mixing together the first, second and third starch-containing components to form a dry mix, and then mixing the dry mix with added water, and preferably an emulsifier, to form the dough. Typically, the dough is formed at a temperature of up to 30 °C, optionally from 5 to 20 °C, further optionally from 10 to 15 °C. Typically, the dry mix has a moisture content of from 5 to 20 wt% water in the dry ingredients (i.e. without addition of any added water in liquid form, which is later added to form the dough), optionally from 10 to 12 wt% water, based on the weight of the dry mix. Typically, when the dry mix is mixed with the added water, and optional emulsifier, to form the dough the dry mix has a temperature of from 5 to 30 °C, optionally from 5 to 25 °C, and the added water has a temperature of from 5 to 15 °C, optionally from 7 to 12 °C, further optionally from 8 to 11 °C. Typically, the dry mix is mixed with the added water and emulsifier to form the dough for a period of from 3 to 30 seconds, typically from 5 to 30 seconds.

Typically, the dough comprises from 35 to 75 wt% fresh corn masa, from 10 to 40 wt% of the second starch-containing component, and from 5 to 30 wt% of the first starch-containing component, each based upon the weight of the dry ingredients of the dough.

The cold water swelling starch of the first starch-containing component forms a gel matrix in the dough. The dough preferably comprises from 5 to 20 wt%, more preferably from 10 to 15 wt%, typically about 12 wt%, of cold water swelling starch in the first starch-containing component, based upon the weight of the dry ingredients of the dough.

Typically, the first starch-containing component is selected from a pre-gelatinized cereal flour, a pre-gelatinized starch derivative, or any mixture thereof. The component including cold water swelling starch may be at least one selected pre-gelatinized cereal flour selected from corn, wheat, barley, rice, spelt, or any other grain-derived product, or any mixture thereof. Preferably, the component including cold water swelling starch is a pre-gelatinized corn flour.

The dough preferably comprises from 15 to 30 wt%, more preferably from 20 to 30 wt%, typically about 25 wt%, of the second starch-containing component, based upon the weight of the dry ingredients of the dough. The second starch-containing component is selected from tapioca starch and corn starch or a mixture thereof and preferably comprises tapioca cook-up starch and/or waxy corn cook-up starch.

The dough preferably comprises from 45 to 70 wt%, more preferably from 50 to 65 wt%, fresh corn masa, based upon the weight of the dry ingredients of the dough.

The cold water swelling starch has a peak viscosity at a temperature of less than 50 °C. The second starch-containing component has a peak viscosity at a temperature of from 50 to 80 °C, optionally from 60 to 70 °C. The third starch-containing component has a peak viscosity at a temperature of greater than 80 °C. In each case, the viscosity is measured by a rapid viscosity analyser (RVA) in excess water having a weight of water which is 3 times the weight of the third starch-containing component. In particular, it this specification the viscosity was measured on a Perten Instruments RVA 4500 rapid viscosity analyser and Thermocline for Windows (TCW) software as described at http://www.perten.com/products/rapid-visco-analyser-rva/features-and-benefits/), using a stirring speed of 960 rpm for the first 10 seconds and then 160 rpm thereafter. The sample to be tested was corrected for moisture content using the formula: Compensated Sample Weight = (actual (uncompensated) sample weight x 100)/(100 - wright % moisture content of sample) where the actual (uncompensated) sample weight is 3 grams. The weight of the water used for the rapid viscosity analysis was (28 grams - actual (uncompensated) sample weight in grams).

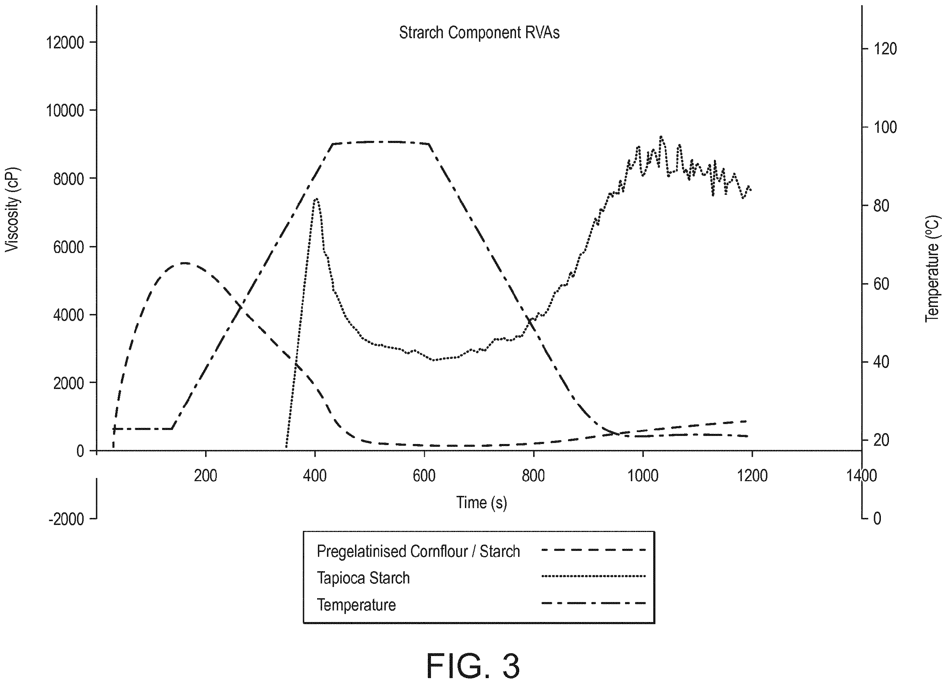

Figure 3 is a graph illustrating the variation of viscosity with time during RVA analysis for the first and second starch components used in accordance with an embodiment of the present invention.

In Figure 3, each of (i) the pregelatinized corn flour and (ii) the tapioca starch were individually subjected to RVA analysis. The viscosity (left-hand y axis) was measured over time (x-axis) and the respective sample was subjected to the temperature profile indicated (right-hand y axis).

It can be seen that (i) the pregelatinized corn flour has a viscosity peak when the temperature is below 50 °C and (ii) the tapioca starch has a viscosity peak when the temperature is above 50 °C. Each of these peaks is representative of the gelatinization temperature or peak water absorption of the respective starch. Although the RVA analysis of the fresh corn masa is not shown in Figure 3, the fresh corn masa has a viscosity peak at a temperature which is above the temperature of the viscosity peak of the tapioca starch, in particular greater than 80 °C.

In some embodiments of the present invention, the dough further comprises from 5 to 20 wt%, more preferably from 10 to 15 wt%, based upon the weight of the dry ingredients of the dough, of at least one cereal flour selected from wheat, barley, rice, spelt, or any other grain-derived product, or any mixture thereof. Other ingredients known for use in snack food chips, in particular tortilla chips, may be incorporated into the dough, typically into the dry mix.

The dough preferably comprises from 25 to 35 wt% added water, typically from 25 to 30 wt% added water, based on the weight of the dough. The dough further comprises from 0.2 to 1.5 wt%, more preferably from 0.2 to 0.5 wt% of an emulsifier, based on the weight of the dough. Preferably, the weight ratio of the added water: emulsifier in the dough is from 25:1 to 200:1, more preferably from 50:1 to 150:1, yet more preferably from 75:1 to 125:1. Typically, the emulsifier is adapted to bind to free starch and optionally comprises or is a monoglyceride-diglyceride emulsifier comprising a mixture of at least one monoglyceride and at least one diglyceride, optionally the monoglyceride-diglyceride emulsifier comprising or consisting of a food additive having E-number E471. The monoglyceride-diglyceride emulsifier may be added to the dough as a liquid or, less preferably, as a solid, and when added as a liquid is optionally melted (for example at a temperature of about 55 °C) or then mixed with a vegetable oil, such as rapeseed oil or sunflower oil, in particular high oleic acid sunflower oil (HOSO), and the liquid emulsifier/oil mixture is then added to the dough. However, it is preferred to add the monoglyceride-diglyceride emulsifier to the dough as a liquid but not in an oil vehicle, since additional oil tends to decrease sheet cohesiveness and the resultant chips may have an increase incidence of through-holes and cracks or chip breakage.

In the preferred monoglyceride-diglyceride emulsifier, the monoglyceride component functions to complex to the free starch, which controls blister formation and the diglyceride component functions to reduce the melting temperature of the monoglyceride-diglyceride emulsifier so that it can more readily be added in the form of a liquid. The monoglyceride component is provided in a concentration which is sufficiently high to control blister formation but not so high that so much free starch has been complexed that there is insufficient free starch remaining in the dough for expansion of the second starch-containing component, for example tapioca starch, to cause expansion of the starch matrix during frying.

After formation of the dough, in a third step 6 a dough sheet is formed from the dough and then in a fourth step 8 a plurality of dough pieces are cut from the dough sheet. Preferably, the dough pieces have a thickness of from 0.5 to 1.5 mm, typically from 0.6 to 1 mm. In preferred embodiments of the invention, the dough sheet is formed in a sheeting apparatus at a linear speed for the sheet of from 20 to 60 linear metres/minute, optionally from 30 to 50 linear metres/minute. High speed sheeting to form a thin dough sheet is possible because the dough has high cohesiveness, and does not rip, tear or form holes during sheeting. This is a very high speed sheeting operation as compared to the typical manufacture of tortilla chips of similar sheet thickness since traditional tortilla chip dough, including a high proportion of fresh corn masa, has low cohesion, and so linear sheet speeds are typically only 15 linear metres/minute or less.

The dough pieces are two-dimensionally pre-shaped, and cut into desired two-dimensional shape and dimensions. Initially the dough pieces are typically substantially planar and flexible. The dough pieces may be regularly shaped, for example being triangular, square, rectangular, elliptical, etc., or be irregularly shaped. Typically, the dough pieces have a surface area of from 1000 to 2500 mm² and a maximum dimension of from 30 to 100 mm.

Subsequently, in a fifth step 10 the dough pieces are cooked to form a plurality of snack food chips. The cooking comprises or consists of frying and the frying temperature is from 160 to 200 °C, optionally from 170 to 190 °C, further optionally about 180 °C. The frying time is from 15 to 30 seconds, optionally from 16 to 25 seconds, further optionally from 18 to 23 seconds.

Most preferably, the cooking consists of frying and there is no toasting step prior to the frying step.

The dough pieces may be shaped against a mould during frying so that the snack food chips are three-dimensionally shaped with a preset shape, for example as disclosed in US-A-2008/0044534. The snack food chips made according to the present invention may be shaped and dimensioned so as to be suitable for use together with a dip, such as a salsa composition, cream cheese, avocado composition, etc. which are well known in the snack food art.

For the manufacture of tortilla chips, it is known to prove the dough prior to frying. In alternative embodiments therefore, the shaped dough pieces may be conveyed through a proving chamber in which the shaped dough pieces are subjected to controlled temperature and humidity to prove the dough prior to cooking, as is generally known to those skilled in the art of making tortilla chips.

The first starch-containing component includes cold water swelling starch which forms a gel matrix for the dough to provide a sheetable dough that can be formed at a low temperature, for example at about room temperature or lower.

In the preferred embodiments an emulsifier is present in the dough which is adapted to bind to free starch. For example, the emulsifier comprises or is a monoglyceride-diglyceride emulsifier comprising a mixture of at least one monoglyceride and at least one diglyceride, optionally the monoglyceride-diglyceride emulsifier comprising or consisting of a food additive having E-number E471. The emulsifier can mop up and bind to free starch in the dough. The lower the free starch, the lower the expansion on frying and the lower the blister formation. The monoglyceride-diglyceride emulsifier therefore can control the level of expansion and blistering. The second starch-containing component, for example, tapioca starch, is uniformly distributed throughout the starch matrix, which in turn enhances the uniform formation of blisters during cooking.

The cold water swelling starch, as the first starch-containing component, is the only starch component of the first, second and third starch-containing components which absorbs water prior to cooking of the dough. At the start of cooking, the second, cook-up, starch, for example tapioca starch as the second starch-containing component, starts to absorb water because it has a higher peak viscosity RVA temperature than the cold water swelling starch but a lower peak viscosity RVA temperature than the fresh corn masa which is the third starch-containing component. The corn masa therefore does not absorb water because the water is preferentially absorbed by the tapioca starch. When the dough is cooked, the dough is heated to a temperature above the peak viscosity RVA temperatures of both of the second and third starch-containing components. When the second starch-containing component has a peak viscosity RVA temperature below the peak viscosity RVA temperature of the corn masa, the second starch-containing component, for example tapioca and/or corn starch, rapidly absorbs water from the dough at the elevated cooking temperature, gelatinizes and expands in volume due to the generation of steam. The gelatinization of the second starch-containing component occurs preferentiallv to the viscosity increase of the corn masa of the third starch-containing component, which has a higher peak viscosity RVA temperature, and so the water in the dough is absorbed by the second starch-containing component, leaving the corn masa of the third starch-containing component substantially unincreased in viscosity and with low water absorption. The corn masa forms a substantially uniform distribution of particles in the starch matrix. The corn masa particles can provide a tortilla chip taste and crunch to the chip.

Since the second starch-containing component is distributed homogeneously throughout the dough, the gelatinization occurs throughout the dough to form an expanded starch matrix together with the first starch-containing component. The expanded matrix forms a light and crunchy texture. The substantially uniform gelatinization provides a plurality of nucleation sites for steam generation as the dough is rapidly dehydrated during cooking. The steam generated forms a substantially uniform array of a plurality of blisters, of substantially uniform size distribution, on opposite surfaces of the chip. Steam generation does not tend to occur at the corn masa particles, which may otherwise cause a non-uniform blister morphology and may cause local stresses in the matrix which could form through-holes or cracks in the cooked chip.

As illustrated in Figure 2, which is not to scale, the resultant snack food chip 20, preferably a tortilla chip, comprises a starch matrix 22 composed of at least one gelatinized and expanded starch, and a plurality of particles 24 distributed in the starch matrix 24. The particles 24 are composed of a third starch-containing component which comprises corn masa which is substantially ungelatinized. The starch matrix 22 forms a continuous wall 26 without through-holes or cracks extending therethrough. The snack food chip 20 has a wall thickness of from 0.5 to 1.5 mm. The snack food chip 20 has having opposite major surfaces 28, 30 which have a plurality of blisters 32 thereon, each blister 32 extending outwardly on both opposite major surfaces 28, 30.

The blisters can readily be detected visually using the naked eye, because of their size. The blisters are aesthetically pleasing on the surfaces of a tortilla chip. For the blisters, the maximum width dimension is typically 1.2 mm and the minimum width dimension is typically 0.5 mm (any smaller sized blisters are essentially not visible to the naked eye). The total number of the various sizes of blisters can readily be detected using a 3-D scanner and a blister number per unit area can be calculated. Since each blister extends outwardly on both surfaces, the blister number per unit area is the number per unit area of one surface of the chip.

In preferred embodiments, for a sample of 6 randomly selected chips, the blisters 32 have a mean total number of blisters per cm² of the opposite major surfaces 28, 30 of from 0.92 to 1.20, preferably from 1.00 to 1.20, with the blisters 32 having a maximum width of 1.2 mm. Typically, for the sample of 6 randomly selected chips, the blisters 32 include a mean total number of blisters 32 having a maximum width of less than 0.5 mm of from 0.63 to 0.83, preferably from 0.68 to 0.78, blisters per cm², and a mean total number of blisters 32 having a maximum width of from 0.5 to 1.2 mm of from 0.25 to 0.43, preferably from 0.30 to 0.38, blisters per cm².

In a random population of 100 of the tortilla chips produced according to preferred embodiments of the present invention, more than 90% by number have a continuous wall 26 without through-holes or cracks extending therethrough.

### Examples

The present invention is now illustrated further with reference to the following non-limiting Examples.

### Example 1

Example 1 produced a tortilla chip using the ingredients listed in Table 1.

**Table 1**

| | Example 1 | Comparative Example 1 | Comparative Example 2 |
|---|---|---|---|
| | Parts by Weight | Parts by Weight | Parts by Weight |
| Dry mixture | | | |
| Fresh corn masa | 61.6 | 61.6 | 0 |
| Corn Masa US #9 | 0 | 0 | 21.6 |
| Corn Masa US #2 | 0 | 0 | 40.0 |
| Pregelatinized corn flour | 12.0 | 0 | 12.0 |
| Tapioca starch | 25.0 | 0 | 25.0 |
| Black bean flake | 1.0 | 1.0 | 1.0 |
| Dry sunflower lecithin | 0.4 | 0 | 0.4 |

| Wet mixture | | | |
|---|---|---|---|
| Liquid mono-diglyceride emulsifier (E471) in rapeseed oil | 1.3 | 1.3 | 1.3 |
| Added water | 39 | 39 | 39 |

In Example 1, as listed in Table 1 the ingredients of the dry mixture, namely the flour components comprising fresh corn masa (the third starch-containing component), and, as a cold water swelling starch (the first starch-containing component), the pregelatinized corn flour, the dry additives comprising tapioca starch (the second starch-containing component), black bean flake and dry sunflower lecithin, were mixed to form a dry mixture.

Separately, an emulsifier ingredient was formed by melting a monoglyceride-diglyceride emulsifier, in particular E471, by heating the solid emulsifier at a temperature of 55 °C, and then mixing the molten emulsifier with rapeseed oil. The emulsifier ingredient comprised 50 wt% monoglyceride-diglyceride emulsifier and 50 wt% in rapeseed oil, each based on the weight of the emulsifier ingredient.

The dry mixture and the emulsifier ingredient were mixed together with the added water to form a dough. The dry mixture has a temperature of 20 to 25 °C, the added water had a temperature of 2 to 10 °C, and the resultant dough mixture was formed at a temperature of 10 to 15 °C. The dough was mixed for less than 5 seconds.

The resultant dough was sheeted through a dough sheeter to a thickness of 0.7 mm. The dough sheet was formed in a sheeting apparatus at a linear speed for the sheet of from 30 to 50 linear metres/minute.

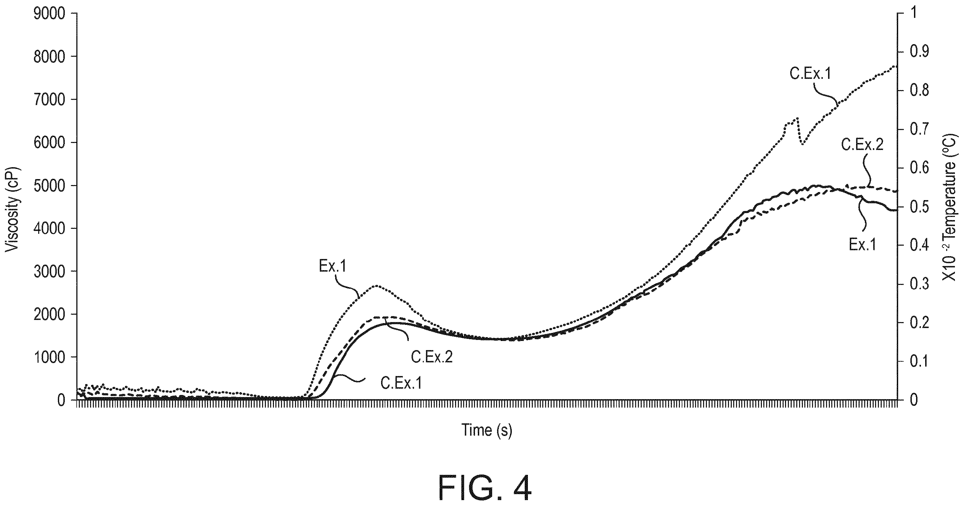

Figure 4 is a graph illustrating the variation of viscosity with time during RVA analysis for the dough produced in Example 1.

In Figure 4, the dough mixture of pregelatinized corn flour, the tapioca starch and the fresh corn masa was subjected to RVA analysis. The viscosity (left-hand y axis) was measured over time (x-axis) and the respective sample was subjected to the temperature profile similar to that shown in Figure 3.

It can be seen that the dough of Example 1 produced an initial viscosity peak of about 2.5-3.0 Pa*s (2500-3000 cP) and later a final viscosity peak of about 5.0 Pa*s (5000 cP). This RVA plot of Figure 4 for Example 1 shows that adding the pregelatinized corn flour and the tapioca starch to fresh corn masa provides a starch matrix which is gelatinized in the frying process while leaving the corn masa substantially ungelatinized. The pregelatinized corn flour and the tapioca starch are the components providing the primary driver for the RVA and gelatinization properties of the dough. The dough sheet was cut into triangular tortilla chip-shaped dough pieces which were then fried in sunflower oil at 185 °C for a period of about 25 seconds, and then topically seasoned. The resultant tortilla chips had a moisture content of 1.5 to 2.0 wt%, based on the total weight of the tortilla chips.

The resultant tortilla chips had a crispy and crunchy texture. In particular, the opposite surfaces of the tortilla chips had a uniform distribution of blisters. The blisters are formed by steam which is rapidly generated during the frying process. Without being bound by any theory, it is believed that the steam is formed substantially uniformly throughout the dough matrix because the ungelatinized corn masa particles act as initiation points from steam formation. Since there is a uniform distribution of corn masa particles throughout the dough, the steam generation is correspondingly uniform, and a large number of substantially similar-sized blisters is formed on the surfaces of the chip. Also, the pregelatinized corn flour and the tapioca starch provide a starch matrix which is gelatinized in the frying process, and the starch matrix can be substantially uniformly deformed to form the distribution of blisters. The liquid emulsifier in the starch matrix is also believed to assist in achieving a uniform blister distribution and an expanded starch matrix in the resultant tortilla chip.

The tortilla chip also did not exhibit any holes or cracks extending through the thickness of the tortilla chip. There was a continuous expanded starchy matrix, with a distribution of substantially unexpanded corn masa particles throughout the matrix. The tortilla chips had a good corn taste.

In this recipe the weight ratio of added water: liquid emulsifier was 39:1.

The fresh corn masa and the liquid emulsifier were both found to control the amount and uniformity of blistering on the surface of the tortilla chips. The liquid emulsifier tended to increase the uniformity of blistering on the surface of the tortilla chips.

The black bean flake component, which is known for use in tortilla chips, was added to provide a distribution of fine back particles in the tortilla chips to provide increases texture and visual contrast. The dry sunflower lecithin was added to assist release of the sheet from the sheeting rolls.

### Comparative Example 1

Comparative Example 1 produced a tortilla chip using the ingredients listed in Table 1. The processing was as set out above for Example 1. The recipe included the same amount of fresh corn masa as Example 1 but excluded tapioca starch and the pre-gelatinized corn flour. The dough resembled a typical traditional tortilla chip dough.

The dough required additional water to be added to produce a processable dough and the dough was very moist. The dough was more difficult to sheet thinly as compared to Example 1.

In Figure 4, the dough mixture of the fresh corn masa of Comparative Example 1 was also subjected to RVA analysis. It can be seen that the dough of Comparative Example 1 produced a slightly lower initial viscosity peak of about 2.0 Pa*s (2000 cP) as compared to Example 1 and later a significantly higher final viscosity peak of about 7.0-8.0 Pa*s (7000-8000 cP). A comparison of the two plots of Figure 4 for Example 1 and Comparative Example 1 shows that adding the pregelatinized corn flour and the tapioca starch to fresh corn masa provides a starch matrix which is gelatinized in the frying process while leaving the corn masa substantially ungelatinized.

### Comparative Example 2

Comparative Example 2 produced a tortilla chip using the ingredients listed in Table 1. The processing was as set out above for Example 1. The recipe excluded fresh corn masa, and instead comprised corn masa flour. The corn masa flour was a mixture of two flours having respective particle sizes. In this recipe the corn masa comprised 65% of finer corn masa flour, the US #2 corn masa flour, and 35% of coarser corn masa flour, the US #9 corn masa flour, each based on the weight of the corn masa flour. The finer corn masa flour had a particle size range in which 0 wt% of the corn masa is retained on a 2000 µm sieve, at most 11 wt% of the corn masa is retained on an 841 µm sieve and at most 32 wt% of the corn masa passes through a 149 µm sieve. The coarser corn masa flour had a particle size range in which 0 wt% of the corn masa is retained on a 2000 µm sieve, at most 22 wt% of the corn masa is retained on an 841 µm sieve and at most 26 wt% of the corn masa passes through a 149 µm sieve.

The dough was drier and more difficult to sheet thinly as compared to Example 1. However the properties of the resultant tortilla chip were similar to those produced by Example 1.

In Figure 4, the dough mixture of Comparative Example 2 was also subjected to RVA analysis. It can be seen that the dough of Comparative Example 2 produced a similar RVA plot as for Example 1. A comparison of the two plots of Figure 4 for Example 1 and Comparative Example 2 shows that adding the pregelatinized corn flour and the tapioca starch to corn masa, which may be in the form of fresh corn masa (for Example 1) or corn masa flour (for Comparative Example 2) provides a starch matrix which is gelatinized in the frying process while leaving the corn masa substantially ungelatinized. The pregelatinized corn flour and the tapioca starch are the components providing the primary driver for the RVA and gelatinization properties of the dough.

## Claims

1. A method of manufacturing snack food chips, the method comprising the steps of:
i. providing a first starch-containing component which comprises a cold water swelling starch, a second starch-containing component which comprises substantially ungelatinized starch, and a third starch-containing component which comprises fresh corn masa that is ungelatinized;
ii. forming a dough from a mixture of the first, second and third starch-containing components and water, the cold water swelling starch forming a gel matrix in the dough;
iii. forming a dough sheet from the dough;
iv. cutting a plurality of dough pieces from the dough sheet; and
v. cooking the dough pieces to form a plurality of snack food chips, the cooking step being carried out to cause the substantially ungelatinized starch in the second starch-containing component to gelatinize, the snack food chips comprising a starch matrix formed from the first and second starch-containing components, and substantially ungelatinized corn masa particles dispersed in the starch matrix, wherein the cooking comprises or consists of frying and the frying temperature is from 160 to 200 °C and the frying time is from 15 to 30 seconds.

2. A method according to claim 1 wherein: i) the cold water swelling starch has a peak viscosity at a temperature of less than 50 °C, when measured by a rapid viscosity analyser (RVA) in excess water having a weight of water which is 3 times the weight of the cold water swelling starch; and/or ii) the second starch-containing component has a peak viscosity at a temperature of from 50 to 80 °C, optionally from 60 to 70 °C, when measured by a rapid viscosity analyser (RVA) in excess water having a weight of water which is 3 times the weight of the second starch-containing component; and/or iii) the third starch-containing component has a peak viscosity at a temperature of greater than 80 °C, when measured by a rapid viscosity analyser (RVA) in excess water having a weight of water which is 3 times the weight of the third starch-containing component.

3. A method according to claim 1 or claim 2 wherein: i) in cooking step v the second starch-containing component gelatinizes to form a continuous flexible starch matrix in which entrapped steam forms bubbles which cause expansion of the continuous flexible starch matrix; and/or ii) in step ii the dough is formed at a temperature of up to 30 °C, optionally from 5 to 20 °C, further optionally from 10 to 15 °C; and/or iii) the cooking consists of frying and there is no oven or toasting step prior to the frying step.

4. A method according to any one of claims 1 to 3 wherein the dough comprises from 35 to 75 wt% fresh corn masa, from 10 to 40 wt% of the second starch-containing component, and from 5 to 30 wt% of the first starch-containing component, each based upon the weight of the dry ingredients of the dough, optionally wherein: i) the dough comprises from 45 to 70 wt%, optionally from 50 to 65 wt%, fresh corn masa, based upon the weight of the dry ingredients of the dough; and/or ii) the dough comprises from 15 to 30 wt%, optionally from 20 to 30 wt%, further optionally 25 wt%, of the second starch-containing component, based upon the weight of the dry ingredients of the dough; and/or iii) the dough comprises from 5 to 20 wt%, optionally 10 to 15 wt%, further optionally 12 wt%, of cold water swelling starch in the first starch-containing component, based upon the weight of the dry ingredients of the dough; and/or iv) the dough further comprises from 5 to 20 wt%, optionally from 10 to 15 wt% based upon the weight of the dry ingredients of the dough, of at least one cereal flour selected from wheat, barley, rice, spelt, or any mixture thereof; and/or v) the dough comprises from 25 to 35 wt%, optionally from 25 to 30 wt%, added water, based on the weight of the dough.

5. A method according to any foregoing claim wherein the second starch-containing component is selected from tapioca starch and corn starch or a mixture thereof and optionally comprises tapioca cook-up starch and/or waxy corn cook-up starch.

6. A method according to any one of claims 1 to 5 wherein the first starch-containing component is selected from a pre-gelatinized cereal flour, a pre-gelatinized starch derivative, or any mixture thereof, optionally wherein the first starch-containing component is at least one pre-gelatinized cereal flour selected from corn, wheat, barley, rice, spelt, or any mixture thereof, further optionally wherein the first starch-containing component is a pre-gelatinized corn flour.

7. A method according to any one of claims 1 to 6 wherein the dough further comprises from 0.2 to 1.5 wt% of an emulsifier which binds to free starch, based on the weight of the dough, optionally wherein: i) the emulsifier is a monoglyceride-diglyceride emulsifier comprising a mixture of at least one monoglyceride and at least one diglyceride, optionally the monoglyceride-diglyceride emulsifier comprising or consisting of a food additive having E-number E471; and/or ii) wherein the dough comprises from 0.2 to 0.5 wt% of the emulsifier, based on the weight of the dough; and/or iii) wherein the weight ratio of the added water: emulsifier in the dough is from 25:1 to 200:1, optionally wherein the weight ratio of the added water: emulsifier in the dough is from 50:1 to 150:1, further optionally from 75:1 to 125:1.

8. A method according to any one of claims 1 to 7 wherein the fresh corn masa is produced by a nixtamalization step carried out on fresh ground corn, preferably immediately prior to forming the dough.

9. A method according to any one of claims 1 to 8 wherein the dough sheet has a thickness of from 0.5 to 1.5 mm, optionally wherein the dough sheet has a thickness of from 0.6 to 1 mm.

10. A method according to any one of claims 1 to 9 wherein in step iii the dough sheet is formed in a sheeting apparatus at a linear speed for the sheet of from 20 to 60 linear metres/minute, optionally from 30 to 50 linear metres/minute.

11. A method according to any one of claims 1 to 10 wherein the dough pieces are shaped against a mould during frying so that the snack food chips are three-dimensionally shaped with a preset shape.

12. A method according to any one of claims 1 to 11 wherein the frying temperature is from 170 to 190 °C, optionally about 180 °C, optionally wherein the frying time is from 16 to 25 seconds, optionally from 18 to 23 seconds.

13. A method according to any foregoing claim wherein the dough is formed by mixing together the first, second and third starch-containing components to form a dry mix, and then mixing the dry mix with water and a monoglyceride-diglyceride emulsifier to form the dough wherein the emulsifier is a monoglyceride-diglyceride emulsifier comprising a mixture of at least one monoglyceride and at least one diglyceride, optionally the monoglyceride-diglyceride emulsifier comprising or consisting of a food additive having E-number E471, optionally wherein: i) the dry mix has a water content of from 5 to 20 wt% water, further optionally from 10 to 12 wt% water, based on the weight of the dry mix; and/or ii) when the dry mix is mixed with the water and monoglyceride-diglyceride emulsifier to form the dough the dry mix has a temperature of from 5 to 30 °C, further optionally from 5 to 25 °C, and the water has a temperature of from 5 to 15 °C, further optionally from 7 to 12 °C, yet further optionally from 8 to 11 °C; and/or iii) the dry mix is mixed with the water and monoglyceride-diglyceride emulsifier to form the dough for a period of from 3 to 30 seconds, further optionally from 5 to 30 seconds.

14. A method according to any foregoing claim wherein the snack food chip comprises a tortilla chip, optionally wherein in a random population of 100 of the tortilla chips, more than 90% by number have a continuous wall without through-holes or cracks extending therethrough.

15. A method according to any foregoing claim wherein the cooking step is carried out to cause the snack food chip to have a plurality of blisters on opposite major surfaces, each blister extending outwardly on both opposite major surfaces, optionally wherein for a sample of 6 randomly selected chips, the blisters have a mean total number of blisters per cm² of the opposite major surfaces of from 0.92 to 1.20, preferably from 1.00 to 1.20, with the blisters having a maximum width of 1.2 mm, optionally wherein for the sample of 6 randomly selected chips, the blisters include a mean total number of blisters having a maximum width of less than 0.5 mm of from 0.63 to 0.83, preferably from 0.68 to 0.78, blisters per cm², and a mean total number of blisters having a maximum width of from 0.5 to 1.2 mm of from 0.25 to 0.43, preferably from 0.30 to 0.38, blisters per cm².

## Patentansprüche

1. Verfahren zur Herstellung von Snack-Chips, wobei das Verfahren die folgenden Schritte umfasst:
i. Bereitstellen einer ersten stärkehaltigen Komponente, die eine kaltwasserquellende Stärke umfasst, einer zweiten stärkehaltigen Komponente, die im Wesentlichen nicht gelatinierte Stärke umfasst, und einer dritten stärkehaltigen Komponente, die frischen Maisteig umfasst, der nicht gelatiniert ist;
ii. Bilden eines Teigs aus einem Gemisch aus der ersten, der zweiten und der dritten stärkehaltigen Komponente und Wasser, wobei die kaltwasserquellende Stärke eine Gelmatrix in dem Teig bildet;
iii. Bilden eines Teigblatts aus dem Teig;
iv. Schneiden einer Vielzahl von Teigstücken aus dem Teigblatt; und
v. Kochen der Teigstücke, um eine Vielzahl von Snack-Chips zu bilden, wobei der Schritt des Kochens durchgeführt wird, um zu bewirken, dass die im Wesentlichen nicht gelatinierte Stärke in der zweiten stärkehaltigen Komponente gelatiniert, wobei die Snack-Chips eine Stärkematrix, die aus der ersten und der zweiten stärkehaltigen Komponente gebildet wird, und im Wesentlichen nicht gelatinierte Maisteigteilchen umfassen, die in der Stärkematrix dispergiert sind, wobei das Kochen Frittieren umfasst oder darin besteht und die Frittiertemperatur von 160 bis 200°C beträgt und die Frittierzeit von 15 bis 30 Sekunden beträgt.

2. Verfahren nach Anspruch 1, wobei: i) die kaltwasserquellende Stärke eine Spitzenviskosität bei einer Temperatur von unter 50°C aufweist, gemessen mit einem schnellen Viskositätsanalysator (Rapid Viscosity Analyser - RVA) in überschüssigem Wasser mit einem Wassergewicht, welches das 3-Fache des Gewichts der kaltwasserquellenden Stärke beträgt; und/oder ii) die zweite stärkehaltige Komponente eine Spitzenviskosität bei einer Temperatur von 50 bis 80°C, wahlweise von 60 bis 70°C, aufweist, gemessen mit einem schnellen Viskositätsanalysator (Rapid Viscosity Analyser - RVA) in überschüssigem Wasser mit einem Wassergewicht, welches das 3-Fache des Gewichts der zweiten stärkehaltigen Komponente beträgt; und/oder iii) die dritte stärkehaltige Komponente eine Spitzenviskosität bei einer Temperatur von höher als 80°C aufweist, gemessen mit einem schnellen Viskositätsanalysator (Rapid Viscosity Analyser - RVA) in überschüssigem Wasser mit einem Wassergewicht, welches das 3-Fache des Gewichts der dritten stärkehaltigen Komponente beträgt.

3. Verfahren nach Anspruch 1 oder Anspruch 2, wobei: i) im Schritt v des Kochens die zweite stärkehaltige Komponente gelatiniert, um eine ununterbrochene biegsame Stärkematrix zu bilden, in der eingeschlossener Dampf Blasen bildet, die Ausdehnung der ununterbrochenen biegsamen Stärkematrix bewirken; und/oder ii) im Schritt ii der Teig bei einer Temperatur von bis zu 30°C, wahlweise von 5 bis 20°C, ferner wahlweise von 10 bis 15°C, gebildet wird; und/oder iii) das Kochen in Frittieren besteht und vor dem Schritt des Frittierens kein Ofen oder Röstschritt vorhanden ist.

4. Verfahren nach einem der Ansprüche 1 bis 3, wobei der Teig von 35 bis 75 Gew.-% frischen Maisteig, von 10 bis 40 Gew.-% der zweiten stärkehaltigen Komponente und von 5 bis 30 Gew.-% der ersten stärkehaltigen Komponente, jeweils bezogen auf das Gewicht der trockenen Zutaten des Teigs, umfasst, wobei wahlweise: i) der Teig von 45 bis 70 Gew.-%, wahlweise von 50 bis 65 Gew.-%, frischen Maisteig, bezogen auf das Gewicht der trockenen Zutaten des Teigs, umfasst; und/oder ii) der Teig von 15 bis 30 Gew.-%, wahlweise von 20 bis 30 Gew.%, ferner wahlweise 25 Gew-%, der zweiten stärkehaltigen Komponente, bezogen auf das Gewicht der trockenen Zutaten des Teigs, umfasst; und/oder iii) der Teig von 5 bis 20 Gew-%, wahlweise von 10 bis 15 Gew.-%, ferner wahlweise 12 Gew.-%, kaltwasserquellende Stärke in der ersten stärkehaltigen Komponente, bezogen auf das Gewicht der trockenen Zutaten des Teigs, umfasst; und/oder iv) der Teig ferner von 5 bis 20 Gew.-%, wahlweise von 10 bis 15 Gew-%, bezogen auf das Gewicht der trockenen Zutaten in dem Teig, von mindestens einem Getreidemehl umfasst, das ausgewählt wird aus Weizen, Gerste, Reis, Dinkel oder einem beliebigen Gemisch davon; und/oder v) der Teig von 25 bis 35 Gew.-%, wahlweise von 25 bis 30 Gew.-%, beigemengtes Wasser, bezogen auf das Gewicht des Teigs, umfasst.

5. Verfahren nach einem der vorhergehenden Ansprüche, wobei die zweite stärkehaltige Komponente ausgewählt wird aus Tapioka-Stärke und Maisstärke oder einem Gemisch davon und wahlweise Tapioka-Kochstärke und/oder Wachsmais-Kochstärke umfasst.

6. Verfahren nach einem der Ansprüche 1 bis 5, wobei die erste stärkehaltige Komponente ausgewählt wird aus einem vorgelatinierten Getreidemehl, einem vorgelatinierten Stärkederivat oder einem beliebigen Gemisch davon, wobei die erste stärkehaltige Komponente wahlweise mindestens ein vorgelatiniertes Getreidemehl ist, das ausgewählt wird aus Mais, Weizen, Gerste, Reis, Dinkel oder einem beliebigen Gemisch davon, wobei die erste stärkehaltige Komponente wahlweise ein vorgelatiniertes Maismehl ist.

7. Verfahren nach einem der Ansprüche 1 bis 6, wobei der Teig ferner, bezogen auf das Gewicht des Teigs, von 0,2 bis 1,5 Gew.-% eines Emulgators umfasst, der sich an freie Stärke bindet, wobei wahlweise: i) der Emulgator ein Monoglycerid-Diglycerid-Emulgator ist, der ein Gemisch aus mindestens einem Monoglycerid und mindestens einem Diglycerid umfasst, wobei der Monoglycerid-Diglycerid-Emulgator einen Lebensmittelzusatzstoff mit der E-Nummer E471 umfasst oder daraus besteht; und/oder ii) wobei der Teig, bezogen auf das Gewicht des Teigs, von 0,2 bis 0,5 Gew.-% des Emulgators umfasst; und/oder iii) wobei das Gewichtsverhältnis zwischen beigemengtem Wasser und Emulgator in dem Teig von 25:1 bis 200:1 beträgt, wobei das Gewichtsverhältnis zwischen beigemengtem Wasser und Emulgator in dem Teig wahlweise von 50:1 bis 150:1, ferner wahlweise von 75:1 bis 125:1, beträgt.

8. Verfahren nach einem der Ansprüche 1 bis 7, wobei der frische Maisbrei durch einen Schritt des Nixtamalisierens hergestellt wird, der auf frisch gemahlenem Mais, vorzugsweise unmittelbar vor dem Bilden des Teigs, durchgeführt wird.

9. Verfahren nach einem der Ansprüche 1 bis 8, wobei das Teigblatt eine Dicke von 0,5 bis 1,5 mm aufweist, wobei das Teigblatt wahlweise eine Dicke von 0,6 bis 1 mm aufweist.

10. Verfahren nach einem der Ansprüche 1 bis 9, wobei im Schritt iii das Teigblatt in einer Auswalzvorrichtung bei einer Lineargeschwindigkeit für das Blatt von 20 bis 60 Linearmeter/Minute, wahlweise von 30 bis 50 Linearmeter/Minute, gebildet wird.

11. Verfahren nach einem der Ansprüche 1 bis 10, wobei die Teigstücke während des Frittierens gegen eine Form geformt werden, derart dass die Snack-Chips dreidimensional mit einer voreingestellten Form geformt werden.

12. Verfahren nach einem der Ansprüche 1 bis 11, wobei die Frittiertemperatur von 170 bis 190°C, wahlweise etwa 180°C, beträgt, wobei die Frittierzeit wahlweise von 16 bis 25 Sekunden, wahlweise von 18 bis 23 Sekunden, beträgt.

13. Verfahren nach einem der vorhergehenden Ansprüche, wobei der Teig durch Zusammenmischen der ersten, der zweiten und der dritten stärkehaltigen Komponente, um eine Trockenmischung zu bilden, und dann Mischen der Trockenmischung mit Wasser und einem Monoglycerid-Diglycerid-Emulgator gebildet wird, um den Teig zu bilden, wobei der Emulgator ein Monoglycerid-Diglycerid-Emulgator ist, der ein Gemisch aus mindestens einem Monoglycerid und mindestens einem Diglycerid umfasst, wobei der Monoglycerid-Diglycerid-Emulgator wahlweise einen Lebensmittelzusatzstoff mit der E-Nummer E471 umfasst oder daraus besteht, wobei wahlweise: i) die Trockenmischung einen Wassergehalt von 5 bis 20 Gew.-% Wasser, wahlweise von 10 bis 12 Gew.-% Wasser, bezogen auf das Gewicht der Trockenmischung, aufweist; und/oder ii) wenn die Trockenmischung mit dem Wasser und dem Monoglycerid-Diglycerid-Emulgator gemischt wird, um den Teig zu bilden, die Trockenmischung eine Temperatur von 5 bis 30°C, ferner wahlweise von 5 bis 25°C, aufweist, und das Wasser eine Temperatur von 5 bis 15°C, ferner wahlweise von 7 bis 12°C, ferner wahlweise von 8 bis 11°C, aufweist; und/oder iii) die Trockenmischung zum Bilden des Teigs während eines Zeitraums von 3 bis 30 Sekunden, ferner wahlweise von 5 bis 30 Sekunden, mit dem Wasser und dem Monoglycerid-Diglycerid-Emulgator gemischt wird.

14. Verfahren nach einem der vorhergehenden Ansprüche, wobei der Snack-Chip einen Tortilla-Chip umfasst, wobei wahlweise in einer Zufallspopulation von 100 der Tortilla-Chips mehr als 90% der Anzahl eine ununterbrochene Wand ohne Durchgangslöcher oder Risse aufweisen, die sich durch diese hindurch erstrecken.

15. Verfahren nach einem der vorhergehenden Ansprüche, wobei der Schritt des Kochens durchgeführt wird, um zu bewirken, dass der Snack-Chip eine Vielzahl von Bläschen auf entgegengesetzten Hauptoberflächen aufweist, wobei jedes Bläschen sich auf beiden entgegengesetzten Hauptoberflächen nach außen erstreckt, wobei wahlweise für eine Probe von 6 zufällig ausgewählten Chips die Bläschen eine mittlere Gesamtanzahl von Bläschen pro cm² auf den entgegengesetzten Hauptoberflächen von 0,92 bis 1,20, vorzugsweise von 1,00 bis 1,20, aufweisen, wobei die Bläschen eine maximale Breite von 1,2 mm aufweisen, wobei für die Probe von 6 zufällig ausgewählten Chips die Bläschen eine mittlere Gesamtanzahl von Bläschen mit einer maximalen Breite von kleiner als 0,5 mm von 0,63 bis 0,83, vorzugsweise von 0,68 bis 0,78, Bläschen pro cm² umfassen und eine mittlere Gesamtanzahl von Bläschen mit einer maximalen Breite von 0,5 bis 1,2 mm von 0,25 bis 0,43, vorzugsweise von 0,30 bis 0,38, Bläschen pro cm², umfassen.

## Revendications

1. Procédé de fabrication de chips pour collation, le procédé comprenant les étapes de :
i. fourniture d'un premier composant contenant de l'amidon qui comprend un amidon gonflant à l'eau froide, un deuxième composant contenant de l'amidon qui comprend de l'amidon pratiquement non gélatinisé, et un troisième composant contenant de l'amidon qui comprend de la purée de maïs fraîche qui n'est pas gélatinisée ;
ii. formation d'une pâte à partir d'un mélange des premier, deuxième et troisième composants contenant de l'amidon et d'eau, l'amidon gonflant à l'eau froide formant une matrice de gel dans la pâte ;
iii. formation d'une feuille de pâte à partir de la pâte ;
iv. découpage d'une pluralité de morceaux de pâte dans la feuille de pâte ; et
v. cuisson des morceaux de pâte pour former une pluralité de chips pour collation, l'étape de cuisson étant effectuée pour amener l'amidon pratiquement non gélatinisé dans le deuxième composant contenant de l'amidon à gélatiniser, les chips pour collation comprenant une matrice d'amidon formée à partir des premier et deuxième composants contenant de l'amidon, et de particules de purée de maïs pratiquement non gélatinisée dispersées dans la matrice d'amidon, dans lequel la cuisson comprend ou consiste en une friture, et la température de friture est de 160 à 200 °C et le temps de friture est de 15 à 30 secondes.

2. Procédé selon la revendication 1, dans lequel : i) l'amidon gonflant à l'eau froide a une viscosité maximale à une température inférieure à 50 °C, quand elle est mesurée par un analyseur de viscosité rapide (RVA) dans un excès d'eau ayant un poids d'eau qui est de 3 fois le poids de l'amidon gonflant à l'eau froide ; et/ou ii) le deuxième composant contenant de l'amidon a une viscosité maximale à une température de 50 à 80 °C, éventuellement de 60 à 70 °C, quand elle est mesurée par un analyseur de viscosité rapide (RVA) dans un excès d'eau ayant un poids d'eau qui est de 3 fois le poids du deuxième composant contenant de l'amidon ; et/ou iii) le troisième composant contenant de l'amidon a une viscosité maximale à une température supérieure à 80 °C, quand elle est mesurée par un analyseur de viscosité rapide (RVA) dans un excès d'eau ayant un poids d'eau qui est de 3 fois le poids du troisième composant contenant de l'amidon.

3. Procédé selon la revendication 1 ou la revendication 2, dans lequel : i) dans l'étape de cuisson v le deuxième composant contenant de l'amidon gélatinise pour former une matrice d'amidon flexible continue dans laquelle la vapeur piégée forme des bulles qui provoquent l'expansion de la matrice d'amidon flexible continue ; et/ou ii) dans l'étape ii la pâte est formée à une température allant jusqu'à 30 °C, éventuellement de 5 à 20 °C, éventuellement encore de 10 à 15 °C ; et/ou iii) la cuisson consiste en une friture et il n'y a pas d'étape de passage au four ou au grill avant l'étape de friture.

4. Procédé selon l'une quelconque des revendications 1 à 3, dans lequel la pâte comprend de 35 à 75 % en poids de purée de maïs fraîche, de 10 à 40 % en poids du deuxième composant contenant de l'amidon, et de 5 à 30 % en poids du premier composant contenant de l'amidon, dans chaque cas par rapport au poids des ingrédients secs de la pâte, éventuellement dans lequel : i) la pâte comprend de 45 à 70 % en poids, éventuellement de 50 à 65 % en poids, de purée de maïs fraîche, par rapport au poids des ingrédients secs de la pâte ; et/ou ii) la pâte comprend de 15 à 30 % en poids, éventuellement de 20 à 30 % en poids, éventuellement encore 25 % en poids, du deuxième composant contenant de l'amidon, par rapport au poids des ingrédients secs de la pâte ; et/ou iii) la pâte comprend de 5 à 20 % en poids, éventuellement de 10 à 15 % en poids, éventuellement encore 12 % en poids, d'amidon gonflant à l'eau froide dans le premier composant contenant de l'amidon, par rapport au poids des ingrédients secs de la pâte ; et/ou iv) la pâte comprend en outre de 5 à 20 % en poids, éventuellement de 10 à 15 % en poids, par rapport au poids des ingrédients secs de la pâte, d'au moins une farine de céréale choisie parmi le blé, l'orge, le riz, l'épeautre, ou l'un quelconque de leurs mélanges ; et/ou v) la pâte comprend de 25 à 35 % en poids, éventuellement de 25 à 30 % en poids, d'eau ajoutée, par rapport au poids de la pâte.

5. Procédé selon l'une quelconque des revendications précédentes, dans lequel le deuxième composant contenant de l'amidon est choisi parmi l'amidon de tapioca et l'amidon de maïs ou un mélange de ceux-ci et comprend éventuellement de l'amidon de cuisson de tapioca et/ou de l'amidon de cuisson de maïs cireux.

6. Procédé selon l'une quelconque des revendications 1 à 5, dans lequel le premier composant contenant de l'amidon est choisi parmi une farine de céréale prégélatinisée, un dérivé d'amidon prégélatinisé, ou l'un quelconque de leurs mélanges, éventuellement dans lequel le premier composant contenant de l'amidon est au moins une farine de céréale prégélatinisée choisie parmi le maïs, le blé, l'orge, le riz, l'épeautre, ou l'un quelconque de leurs mélanges, éventuellement encore dans lequel le premier composant contenant de l'amidon est une farine de maïs prégélatinisée.

7. Procédé selon l'une quelconque des revendications 1 à 6, dans lequel la pâte comprend en outre de 0,2 à 1,5 % en poids d'un émulsionnant qui se lie à l'amidon libre, par rapport au poids de la pâte, éventuellement dans lequel : i) l'émulsionnant est un émulsionnant monoglycéridique-diglycéridique comprenant un mélange d'au moins un monoglycéride et d'au moins un diglycéride, éventuellement l'émulsionnant monoglycéridique-diglycéridique comprend ou consiste en un additif alimentaire ayant le nombre E E471 ; et/ou ii) dans lequel la pâte comprend de 0,2 à 0,5 ²% en poids de l'émulsionnant par rapport au poids de la pâte ; et/ou iii) dans lequel le rapport en poids de l'eau ajoutée à l'émulsionnant dans la pâte est de 25/1 à 200/1, éventuellement dans lequel le rapport en poids de l'eau ajoutée à l'émulsionnant dans la pâte est de 50/1 à 150/1, éventuellement encore de 75/1 à 125/1.

8. Procédé selon l'une quelconque des revendications 1 à 7, dans lequel la purée de maïs fraîche est produite par une étape de nixtamalisation effectuée sur du maïs moulu frais, de préférence immédiatement avant la formation de la pâte.

9. Procédé selon l'une quelconque des revendications 1 à 8, dans lequel la feuille de pâte a une épaisseur de 0,5 à 1,5 mm, éventuellement dans lequel la feuille de pâte a une épaisseur de 0,6 à 1 mm.

10. Procédé selon l'une quelconque des revendications 1 à 9, dans lequel, dans l'étape iii, la feuille de pâte est formée dans un appareil de formation de feuille à une vitesse linéaire pour la feuille de 20 à 60 mètres linéaires par minute, éventuellement de 30 à 50 mètres linéaires par minute.

11. Procédé selon l'une quelconque des revendications 1 à 10, dans lequel les morceaux de pâte sont façonnés contre un moule durant la friture de façon que les chips pour collation soient formées tridimensionnellement selon une forme préétablie.

12. Procédé selon l'une quelconque des revendications 1 à 11, dans lequel la température de friture est de 170 à 190 °C, éventuellement d'environ 180 °C, éventuellement dans lequel le temps de friture est de 16 à 25 secondes, éventuellement de 18 à 23 secondes.

13. Procédé selon l'une quelconque des revendications précédentes, dans lequel la pâte est formée par mélange ensemble des premier, deuxième et troisième composants contenant de l'amidon pour former un mélange sec, et ensuite mélange du mélange sec avec de l'eau et un émulsionnant monoglycéridique-diglycéridique pour former la pâte, dans lequel l'émulsionnant est un émulsionnant monoglycéridique-diglycéridique comprenant un mélange d'au moins un monoglycéride et d'au moins un diglycéride, éventuellement l'émulsionnant monoglycéridique-diglycéridique comprenant ou consistant en un additif alimentaire ayant le nombre E E471, éventuellement dans lequel : i) le mélange sec a une teneur en eau de 5 à 20 % en poids d'eau, éventuellement encore de 10 à 12 % en poids d'eau, par rapport au poids du mélange sec ; et/ou ii) quand le mélange sec est mélangé avec l'eau et l'émulsionnant monoglycéridique-diglycéridique pour former la pâte, le mélange sec a une température de 5 à 30 °C, éventuellement encore de 5 à 25 °C, et l'eau a une température de 5 à 15 °C, éventuellement encore de 7 à 12 °C, éventuellement plus encore de 8 à 11 °C ; et/ou le mélange sec est mélangé avec l'eau et l'émulsionnant monoglycéridique-diglycéridique pour former la pâte pendant une période de 3 à 30 secondes, éventuellement encore de 5 à 30 secondes.

14. Procédé selon l'une quelconque des revendications précédentes, dans lequel la chips pour collation comprend une chips tortilla, éventuellement dans lequel, dans une population aléatoire de 100 des chips tortillas, plus de 90 % en nombre ont une paroi continue sans trous traversants ou craquelures s'étendant à travers celles-ci.

15. Procédé selon l'une quelconque des revendications précédentes, dans lequel l'étape de cuisson est effectuée de telle sorte que la chips pour collation ait une pluralité de boursouflures sur des surfaces majeures opposées, chaque boursouflure s'étendant vers l'extérieur sur les deux surfaces majeures opposées, éventuellement dans lequel, pour un échantillon de 6 chips choisies au hasard, les boursouflures ont un nombre total moyen de boursouflures par cm² des surfaces majeures opposées de 0,92 à 1,20, de préférence de 1,00 à 1,20, les boursouflures ayant une largeur maximale de 1,2 mm, éventuellement dans lequel, pour l'échantillon de 6 chips choisies au hasard, les boursouflures comprennent un nombre total moyen de boursouflures ayant une largeur maximale inférieure à 0,5 mm qui est de 0,63 à 0,83, de préférence de 0,68 à 0,78 boursouflure par cm², et un nombre total moyen de boursouflures ayant une largeur maximale de 0,5 à 1,2 mm qui est de 0,25 à 0,43, de préférence de 0,30 à 0,38 boursouflure par cm².
